# EUROPEAN PATENT SPECIFICATION

(11) **EP 3 241 429 B1**
(45) Date of publication and mention of the grant of the patent: **19.12.2018**
(21) Application number: 17168452.5
(22) Date of filing: 27.04.2017
(51) Int. Cl.: A01G 13/02, E01C 9/00

(54) **ROOT CONTROL DEVICE FOR URBAN TREES**
WURZELKONTROLLVORRICHTUNG FÜR STÄDTISCHE BÄUME
DISPOSITIF DE CONTRÔLE DE RACINES POUR DES ARBRES URBAINS

(30) Priority: 03.05.2016 ES 201630573
(43) Date of publication of application: 08.11.2017
(73) Proprietor: Jansana Roca, Luis, 17184 Salija, Girona (ES)
(72) Inventor: Jansana Roca, Luis, 17184 Salija, Girona (ES)
(74) Representative: Pons

(56) References cited:
- WO-A1-2011/041850
- US-A1- 2003 017 001
- US-A1- 2009 255 868

## Description

### OBJECT OF THE INVENTION

The present invention falls within the technical field of garden irrigation, and more specifically, within the field of irrigation systems that use perforated pipes placed in the ground, as well as in the field of plant containers. It particularly relates to a control device for the growth of tree roots, especially designed for urban settings.

### BACKGROUND OF THE INVENTION

The living space of a tree is made up of the above-ground part, comprised of leaves, branches and the trunk, and the underground part, occupied by the roots. Although the depth and extension of the root system vary widely, it usually occupies a space equal to or greater than the above-ground part.

The roots are responsible for anchoring the plant in the ground and for absorbing raw material due to non-woody roots or absorbent hairs. The root system can be a taproot system, with a single main root going downwards from which the secondary roots grow, or branched, in other words, made up of several main roots.

In urban environments, a tree faces a series of adverse conditions with respect to those in the natural environment, among which a lower incidence of solar radiation, reflection of light created by the surrounding buildings, greater artificial radiation, the existence of frequent air currents and funneled wind, generally higher temperatures, intense evapotranspiration, a low hygrometric rate, a greater presence of pollutants and greater competition for space are all notable.

The root systems of trees planted in urban areas have a plurality of specific problems, such as the impermeability of the ground, lower availability of water, little available volume for root growth and development, lack of available organic material, chemical imbalances in the ground derived from a lack of nutrients, broken and compacted ground or low levels of O₂ that lead to situations of root asphyxiation.

Moreover, the lack of control over the proliferation of secondary roots in an upward direction towards the surface, in search of moisture, leads to the deterioration of surface pavement due to the pressure exerted on the base layer of said pavement, occurring in sidewalks as well as roads. In a first phase, said deterioration consists of a bulging of the surface of said pavement, which, if not corrected in time, can, in a second phase, come to break or pull it up, thus endangering vehicles and pedestrians and resulting in higher costs derived from the relevant repairs. A root control device for urban trees is known from document WO-A-2011041850.

### DESCRIPTION OF THE INVENTION

The object of the invention consists of a root control device, according to the features of claim 1, especially designed for plants located in urban areas, which prevents the problems derived from the uncontrolled growth of the aforementioned roots.

To do so, the device comprises a tree basin equipped with a central hole intended to house the base of a tree trunk, a plurality of wells defined in the ground around the hole of the tree basin, an irrigation system and a physical barrier to prevent the roots from rising to the surface.

The essentially cylindrical-shaped wells are defined in the ground with a radial arrangement with respect to the tree trunk and they are filled with a porous material, preferably sand.

The irrigation system, which is preferably a drip system, comprises a plurality of irrigation conduits corresponding to the plurality of wells defined in the ground, which apply a water flow that comes from a general conduit with the object of creating moist conditions inside each one of the respective wells, in order to attract the growth of the tree roots towards said wells and thus prevent upward growth towards the surface in their search for available water, which causes problems in the aforementioned pavements.

Optionally, the irrigation system comprises regulation means such as an irrigation programmer and a plurality of regulation valves corresponding to each one of the irrigation conduits.

For those cases in which, despite the moist conditions artificially created in the wells, a few roots grow upwards, the installation of a physical type barrier is envisaged that blocks said growth and redirects the roots towards the interior of the ground.

Said physical barrier preferably comprises an essentially frustoconical-shaped concentric screen around the tree trunk, made of a material that cannot be broken by the roots, preferably polypropylene or PVC.

It is envisaged that, in order to prevent discontinuities in the pavement in which the tree basin is defined, it is covered by protection means, preferably a grate.

The root control device for urban trees as described supposes a simple, cheap and versatile solution for preventing the uncontrolled upward growth of said roots, preventing problems such as breaking the pavement and the associated risks and costs described above.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1.- Shows an upper perspective view of the root control device, in which its main constituting elements can be seen.
Figure 2.- Shows a plant view of the device.

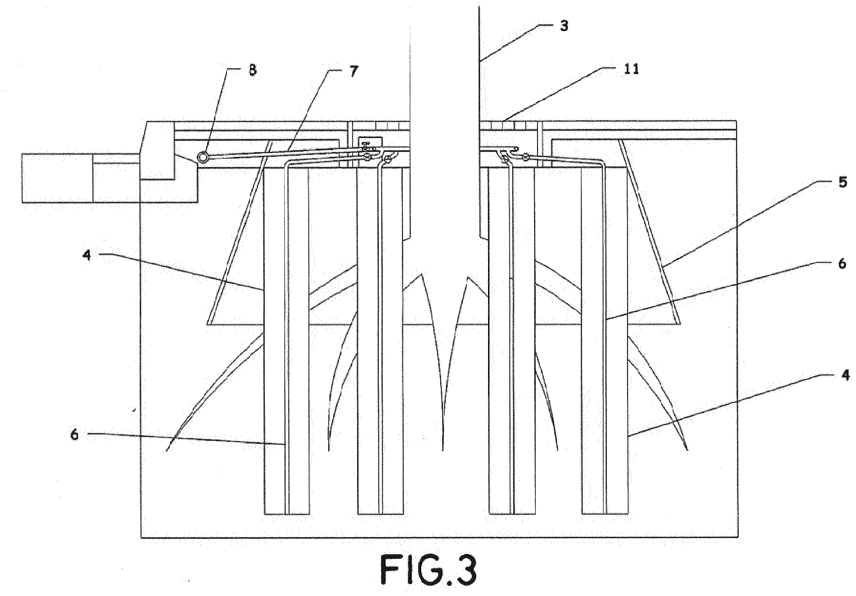

Figure 3.- Shows a front view of a longitudinal cross section of the device, in which the growth of the roots attracted towards the wells in search of moisture can be seen.

### PREFERRED EMBODIMENT OF THE INVENTION

What follows is a detailed description, with the help of the figures referenced above, of an exemplary embodiment of the object of the present invention.

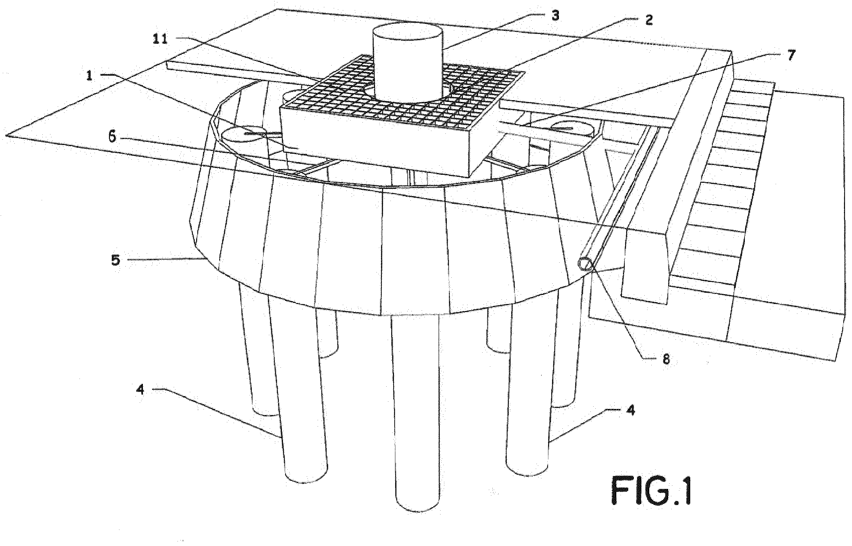

The described root control device for urban trees, which is schematically shown in figure 1, is made up of an essentially quadrangle-shaped tree basin (1), in the center of which a cylindrical hole (2) is defined intended to house the base of the tree trunk (3), a plurality of wells (4), an irrigation system and a physical barrier (5).

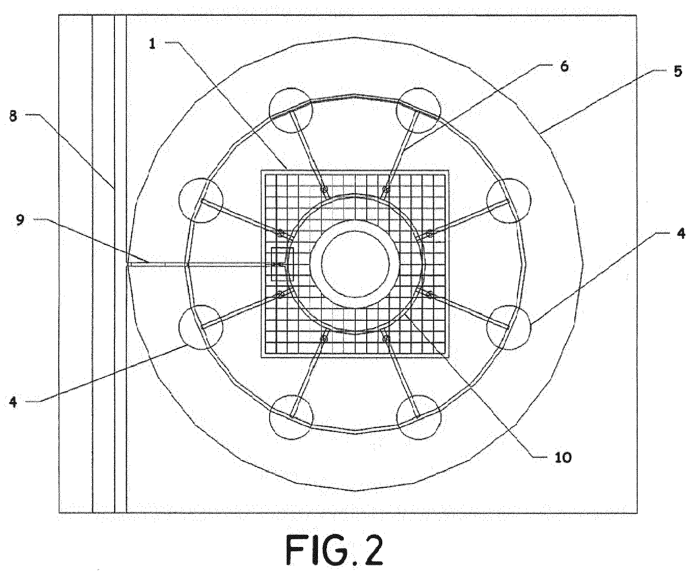

The hole (2) is surrounded in its entirety by the plurality of essentially cylindrical-shaped wells (4) defined in the ground and uniformly and radially arranged with respect to their center, as shown in figure 2. The wells (4) are filled in their entirety with a porous sand.

The preferred embodiment described herein comprises eight wells (4) each with a diameter of 20 centimeters and a depth of 1.50 meters, uniformly defined throughout a circular area with a 1.50 meter radius with respect to the center of the hole (2).

The irrigation system comprises a plurality of irrigation conduits (6) corresponding to each one of the wells (4), and a branch (7) that splits off from a general water conduit (8). Each one of the irrigation conduits (6) is arranged in a position that essentially coincides with the center of the well (4), and runs longitudinally from its upper end to its lower end.

The branch (7) comprises a first straight section (9) and a second essentially ring-shaped section (10), arranged in a concentric position outside the hole (2) defined in the tree basin (1). The first section (9) takes a water flow that comes from the general conduit (8) and channels it towards the second section (10), from the bottom of which the irrigation conduits (6) split off towards the lower end of each one of the wells (4), the second section (10) distributing said flow in an equal manner among each one of the irrigation conduits (6).

In this preferred embodiment, the irrigation conduits (6) are specific for drip irrigation and have a 16 millimeter diameter, and apply the water flow that comes from the branch (7), with a diameter of 50 millimeters, taken from the general conduit (8), in a localized way along the depth of each one of the wells (4) in which they are located, in order to create moist conditions capable of attracting the tree roots towards said wells (4).

It is envisaged that the irrigation system additionally comprises regulation means, which are not represented in the attached figures, in order to determine the flow applied. In the preferred embodiment described herein, the regulation means comprise an irrigation programmer and a plurality of regulation valves, corresponding to each one of the irrigation conduits (6).

The physical barrier (5) comprises an essentially frustoconical-shaped screen buried in the ground and arranged concentrically and underneath the hole (2) of the tree basin (1), as seen in figure 1. Said physical barrier (5) prevents the growth of the roots towards the surface by blocking their advance and redirecting them towards the lower part of the ground.

In order to prevent the roots from crossing said barrier (5), the screen is made of a material resistant to the root pressure, which in this preferred embodiment is polypropylene.

Lastly, a grate (11) covers the surface of the tree basin (1), in order to protect the base of the tree trunk (3) and the underlying installation as well as to make the tree basin (1) level with the surrounding pavement, thus preventing discontinuities that could create obstacles and accidents for both pedestrians and vehicles.

The installation of the root control device for urban trees as described starts with the excavation of a radial area around the tree trunk, in which the wells (4) are made and the elements of the irrigation system are incorporated. The wells (4) are then filled with sand and the barrier (5) is arranged in order to prevent the roots from growing towards the surface.

In a later phase, all of the previously excavated radial area is filled with soil rich in nutrients that are easily available for the roots, being careful to leave the regulation means of the irrigation system easily accessible in order to easily make adjustments and repairs. Lastly, the tree basin (1) is defined by means of construction and it is covered with the grate (11).

## Claims

1. A root control device for urban trees, intended to prevent the problems derived from uncontrolled tree root growth in urban areas, comprising an essentially quadrangle-shaped tree basin (1), in the center of which a cylindrical hole (2) is defined intended to house the base of the tree trunk (3), **characterized in that** it comprises:
- a plurality of essentially cylindrical-shaped wells (4) defined in the ground and uniformly and radially arranged with respect to the center of the hole (2) of the tree basin (1), filled with a porous material,
- an irrigation system, which in turn comprises:
- a branch (7) that takes a water flow circulating through a general conduit (8), and
- a plurality of irrigation conduits (6), corresponding to the plurality of wells (4), intended to create moist conditions inside each one of said wells (4) such that they attract the growth of the tree roots towards said wells,
and
- a physical barrier (5) arranged concentrically and underneath the hole (2) of the tree basin (1) in order to block the advance of the roots towards the surface and redirect them towards the lower part of the ground.

2. The root control device for urban trees, according to claim 1, **characterized in that** the branch (7) additionally comprises:
- a first essentially straight-shaped section (9), that takes a water flow that comes from the general conduit (8), and
- a second essentially ring-shaped section (10), arranged in a concentric position outside the hole (2) defined in the tree basin (1) and from the bottom of which the irrigation conduits (6) split off towards the lower end of each one of the wells (4), which channels the water flow circulating through the first section (9) and distributes it equally among each one of the irrigation conduits (6).

3. The root control device for urban trees, according to claim 1, **characterized in that** the irrigation conduits (6) are drip irrigation.

4. The root control device for urban trees, according to claim 1, **characterized in that** the irrigation system additionally incorporates flow regulation means.

5. The root control device for urban trees, according to claim 4, **characterized in that** the flow regulation means comprise an irrigation programmer and a plurality of regulation valves, corresponding to each one of the irrigation conduits (6).

6. The root control device for urban trees, according to claim 1, **characterized in that** the porous material for filling the wells (4) is sand.

7. The root control device for urban trees, according to claim 1, **characterized in that** the barrier (5) is made of polypropylene.

8. The root control device for urban trees, according to claim 1, **characterized in that** the barrier (5) is made of PVC.

9. The root control device for urban trees, according to claim 1, **characterized in that** the surface of the tree basin (1) is covered by a grate (11).

## Patentansprüche

1. Wurzelkontrollvorrichtung für städtische Bäume, die dazu bestimmt ist, die Probleme zu verhindern, die sich aus unkontrolliertem Baumwurzelwachstum in städtischen Gebieten ergeben, umfassend eine im Wesentlichen viereckige Baumgrube (1), in dessen Mitte ein zylindrisches Loch (2) definiert ist, das dazu bestimmt ist, den Fuß des Baumstammes (3) aufzunehmen, **dadurch gekennzeichnet, dass** sie Folgendes umfasst:
- eine Vielzahl von im Wesentlichen zylinderförmigen Schächten (4), die im Boden definiert sind und gleichmäßig und radial in Bezug auf die Mitte des Lochs (2) der Baumgrube (1) angeordnet sind, gefüllt mit einem porösen Material,
- ein Bewässerungssystem, das wiederum Folgendes umfasst:
- eine Abzweigung (7), die einen Wasserstrom aufnimmt, der durch eine allgemeine Leitung (8) fließt, und
- eine Vielzahl von Bewässerungsleitungen (6), die der Vielzahl von Schächten (4) entsprechen, die dazu bestimmt sind, feuchte Bedingungen in jedem der Schächte (4) zu schaffen, so dass sie das Wachstum der Baumwurzeln zu den Schächten hin anziehen,
und
- eine physische Barriere (5), die konzentrisch und unterhalb des Lochs (2) der Baumgrube (1) angeordnet ist, um den Vorstoß der Wurzeln in Richtung der Oberfläche zu hemmen und sie in Richtung des unteren Teils des Bodens umzuleiten.

2. Wurzelkontrollvorrichtung für städtische Bäume nach Anspruch 1, **dadurch gekennzeichnet, dass** die Abzweigung (7) zusätzlich Folgendes umfasst:
- einen ersten im Wesentlichen geradlinigen Abschnitt (9), der einen Wasserstrom aufnimmt, der aus der allgemeinen Leitung (8) kommt, und
- einen zweiten im Wesentlichen ringförmigen Abschnitt (10), der in einer konzentrischen Position außerhalb des in der Baumgrube (1) definierten Lochs (2) angeordnet ist und von dessen Boden aus die Bewässerungsleitungen (6) zum unteren Ende jeder der Schächte (4) hin abgehen, der den durch den ersten Abschnitt (9) fließenden Wasserstrom leitet und ihn gleichmäßig auf jede der Bewässerungsleitungen (6) verteilt.

3. Wurzelkontrollvorrichtung für städtische Bäume nach Anspruch 1, **dadurch gekennzeichnet, dass** die Bewässerungsleitungen (6) Tropfbewässerung sind.

4. Wurzelkontrollvorrichtung für städtische Bäume nach Anspruch 1, **dadurch gekennzeichnet, dass** das Bewässerungssystem zusätzlich Mittel zur Durchflussregelung beinhaltet.

5. Wurzelkontrollvorrichtung für städtische Bäume nach Anspruch 4, **dadurch gekennzeichnet, dass** die Mittel zur Durchflussregelung einen Bewässerungsprogrammierer und eine Vielzahl von Regelventilen umfassen, die jeder der Bewässerungsleitungen (6) entsprechen.

6. Wurzelkontrollvorrichtung für städtische Bäume nach Anspruch 1, **dadurch gekennzeichnet, dass** das poröse Material zum Füllen der Schächte (4) Sand ist.

7. Wurzelkontrollvorrichtung für städtische Bäume nach Anspruch 1, **dadurch gekennzeichnet, dass** die Barriere (5) aus Polypropylen besteht.

8. Wurzelkontrollvorrichtung für städtische Bäume nach Anspruch 1, **dadurch gekennzeichnet, dass** die Barriere (5) aus PVC besteht.

9. Wurzelkontrollvorrichtung für städtische Bäume nach Anspruch 1, **dadurch gekennzeichnet, dass** die Oberfläche der Baumgrube (1) von einem Gitter (11) abgedeckt ist.

## Revendications

1. Dispositif de contrôle des racines pour arbres urbains, destiné à prévenir les problèmes liés à la croissance incontrôlée des racines dans les zones urbaines, comprenant
un bassin d'arbre essentiellement en forme de quadrilatère (1), au centre duquel
un trou cylindrique (2) est défini pour loger la base du tronc d'arbre, **caractérisé en ce qu'**il comprend :
- une pluralité de puits de forme essentiellement cylindrique (4) définis dans le sol et agencés de manière uniforme et radiale par rapport au centre du trou (2) du bassin d'arbre (1), remplis d'un matériau poreux,
- un système d'irrigation, qui comprend à son tour :
- une branche (7) qui prend un flux d'eau circulant dans un conduit général (8), et
- une pluralité de conduits d'irrigation (6), correspondant à la pluralité de puits (4), destinés à créer des conditions d'humidité à l'intérieur de chacun des dits puits (4), de manière à attirer la croissance des racines des arbres vers lesdits puits,
et
- une barrière physique (5) disposée concentriquement sous le trou (2) du bassin d'arbre (1) afin de bloquer l'avancée des racines vers la surface et les rediriger vers la partie inférieure du sol.

2. Dispositif de contrôle des racines pour arbres urbains, selon la revendication 1,
**caractérisé en ce que** la branche (7) comprend par ailleurs :
- un premier tronçon (9) de forme essentiellement droite, qui prélève un écoulement d'eau provenant du conduit général (8), et
- un second tronçon essentiellement en forme d'anneau (10), disposé dans une position concentrique à l'extérieur du trou (2) défini dans le bassin d'arbre (1) et à partir du fond duquel les conduits d'irrigation (6) se séparent vers l'extrémité inférieure de chacun des puits (4) qui canalise le flux d'eau circulant dans le premier tronçon (9) et le distribue de manière égale entre chacun des conduits d'irrigation (6).

3. Dispositif de contrôle des racines pour arbres urbains, selon la revendication 1,
**caractérisé en ce que** les conduits d'irrigation (6) sont une irrigation goutte à goutte.

4. Dispositif de contrôle des racines pour arbres urbains, selon la revendication 1, **caractérisé en ce que** le système d'irrigation comprend en outre des moyens de régulation du flux.

5. Dispositif de contrôle des racines pour arbres urbains, selon la revendication 4, **caractérisé en ce que** les moyens de régulation du flux comprennent un programmateur d'irrigation et une pluralité de vannes de régulation correspondant à chacun des conduits d'irrigation (6).

6. Dispositif de contrôle des racines pour arbres urbains, selon la revendication 1, **caractérisé en ce que** le matériau poreux destiné à remplir les puits (4) est du sable.

7. Dispositif de contrôle des racines pour arbres urbains, selon la revendication 1, **caractérisé en ce que** la barrière (5) est en polypropylène.

8. Dispositif de contrôle des racines pour arbres urbains, selon la revendication 1, **caractérisé en ce que** la barrière (5) est en PVC.

9. Dispositif de contrôle des racines pour arbres urbains, selon la revendication 1, **caractérisé en ce que** la surface du bassin d'arbre (1) est recouverte d'une grille (11).
